# EUROPEAN PATENT SPECIFICATION

(11) **EP 2 657 550 B1**
(45) Date of publication and mention of the grant of the patent: **08.08.2018**
(21) Application number: 10860924.9
(22) Date of filing: 23.12.2010
(51) Int. Cl.: F16C 7/02, B29C 70/48, B29C 70/86, F16C 3/02, B29C 70/56

(54) **METHOD FOR THE PRODUCTION OF A BAR FROM A COMPOSITE MATERIAL AND LOAD BAR MADE FROM A COMPOSITE MATERIAL**
VERFAHREN ZUR HERSTELLUNG EINES STABES AUS EINEM VERBUNDSTOFF UND BELASTUNGSSTAB AUS EINEM VERBUNDWERKSTOFF
PROCÉDÉ DE FABRICATION D'UNE BARRE DE MATÉRIAU COMPOSITE ET BARRE DE CHARGE CONSTITUÉE DU MATÉRIAU COMPOSITE

(43) Date of publication of application: 30.10.2013
(73) Proprietor: Internacional De Composites, SA., 45007 Toledo (ES); Barros Abreu, Helder Emanuel, 45007 Toledo (ES); Sanchez Martin, Enrique, 45007 Toledo (ES)
(72) Inventor: BARROS ABREU, Helder Emanuel, E-45007 Toledo (ES); SANCHEZ MARTIN, Enrique, E-45007 Toledo (ES)
(74) Representative: Carvajal y Urquijo, Isabel
(86) International application number: PCT/ES2010/070869
(87) International publication number: WO 2012/085299

(56) References cited:
- EP-A1- 0 538 832
- EP-A1- 1 154 166
- EP-A1- 1 154 166
- ES-T3- 2 323 901
- FR-A3- 2 645 070
- US-A- 4 248 062
- US-A- 4 704 918
- US-A- 4 704 918
- US-A1- 2010 122 606

## Description

### Background of the invention

### (a) Field of the invention

The present invention falls within the field of technology for manufacturing resin structures reinforced with fibres and, more specifically, within the manufacturing methods used to produce load bars with resin reinforced with fibres.

### (b) Related technology

Over the past years, the use of structures manufactured with composite materials made of resin reinforced with fibres has increased in the manufacturing of lightweight structures, owing to its extraordinary combination of low density, high mechanical resistance and ability to resist corrosion. The use of these materials is limited by design considerations such as the difficulty of joining metal structures and structures made of composite material together.

Various processes are known in the state of the art for manufacturing load bars made from composite material and tubular structures in general, like those described in US patents 4,704,918 and 6,202,505. The most frequently used processes to manufacture tubular articles with resin reinforced with fibres are "Braiding" (an automatic process in which bundles of fibres are braided over a mandrel) and "Filament Winding" (winding bundles of fibres over a mandrel). These processes lack the possibility of having reinforcement fibres running longitudinally in the bar (at 0°), which is the preferred direction, owing to the load conditions of these elements. Another limitation of the "braiding" type processes is the difficulty in joining a metal terminal element to the composite tube, which is the preferred method for subsequently mounting the load bar.

The preferred process in the state of the art for joining a metal terminal to a composite material bar is the use of fibre traps, as described in US patent 5,160,392 and subsequently refined in US patents 6,379,763 and 6,676,169. The fibre traps are mechanised openings in the external surface of a terminal. At least two layers of fibres are arranged on the same, a first layer in a direction close to the fibre axial with low tension, which pass over the openings, followed by a second later of cross-wise fibres with high tension which force the fibres in the first layer into the fibre traps, this providing a highly resistant join. Both layers of fibres are applied by means of filament welding processes.

The use of processes such as RTM (resin transfer moulding), VARTM (vacuum assisted resin transfer moulding) and LRI (liquid resin infusion) is known in the state of the art, as well as others consisting of impregnating dry fibres and subsequent polymerisation in order to consolidate the piece. These processes, especially RTM, are capable of producing higher quality pieces, which are more tolerant. US patent application 2009/148700 describes a process for manufacturing a fibre bar reinforced with resin, using a variation of the RTM process, which incorporates layers of pretreated fabric in the preform.

The RTM process is not the preferred process for manufacturing tubular products in the state of the art. The main limitation of this process is the difficulty in obtaining a preform with controlled dimensions, which adjusts to the faces of the mould and counter, mould required in the RTM process. When the preform has a diameter greater than the diameter of the mould cavity, longitudinal wrinkles are formed. When the diameter of the preform is less than the diameter of the mould cavity, the hollow is filled with an excess of resin. In both cases, the pieces manufactured are rejected because they are defective.

As a result, the need for an- improved method for moulding load bars arises in moulding processes by means of resin transfer moulding (RTM). Furthermore, load bars manufactured with resin reinforced with fibres capable of meeting the quality requirements associated with lightweight structures are necessary. Equally, a method which makes it possible to integrate metal terminals into load bars manufactured with resin reinforced with fibres, manufactured by means of resin transfer moulding (RTM) processes is necessary.

### Description of the invention

The present invention provides a solution to the requirements identified above. It provides a process according to claim 1 capable of consistently producing bars of resin reinforced with high quality fibres, the dimensions of which are suitably tolerant with the integrated terminals.

In accordance with the present invention, the method comprises the steps defined in claim 1.

In one embodiment, the ensemble of fabrics made of dry material comprises at least one fabric made of mainly unidirectional fibres, running in the axial direction and at least one fabric made of material woven with orthogonal fibres. The fabrics may be composed of bundles of long carbon fibres which are interwoven in perpendicular directions, with a ratio which varies between balanced, 50/50 and mostly unidirectional, 95/5.

In another embodiment, in the process which entails moulding the dry fabrics on the mandrel and introducing the mandrel between at least two pre-heated rollers, which apply pressure and heat to the layers of dry fibres in order to obtain lesser tolerance and greater repetitiousness in the thickness of the preform.

In another embodiment, the terminals of the bar are manufactured from steel, with an opening which acts as a fibre trap, said opening being in an angular form and following a helical path along the length of the external surface of the terminal.

### Brief description of the drawings

The invention shall be described in greater detail with reference to the drawings attached, wherein Figures 1-5 provide a set of representations showing the stages in the process for manufacturing a bar of resin reinforced with fibres, in accordance with the present invention.
Figure 1 is an exploded view of a mandrel used in a process of the present invention, comprising a tubular foam core and two terminals at both ends of the tube.
Figure 2 is a plan view of the cutting patterns used for the fibre fabrics used in a process of the present invention.
Figure 3 is an isometric schematic representation of the process for stretching the dry fibre fabrics on the mandrel by employing a tool composed of preheated rollers.
Figure 4 is an isometric schematic representation of the formation of the mould and counter mould for the resin transfer process used in the present invention.
Figure 5 is an isometric representation of the load bar manufactured from resin reinforced with fibres, following the milling and finishing processes.
Figure 6 represents an alternative terminal with a built-in helical opening, which will act as a fibre trap in accordance with one of the aspects of the present invention.

### Detailed description of the invention

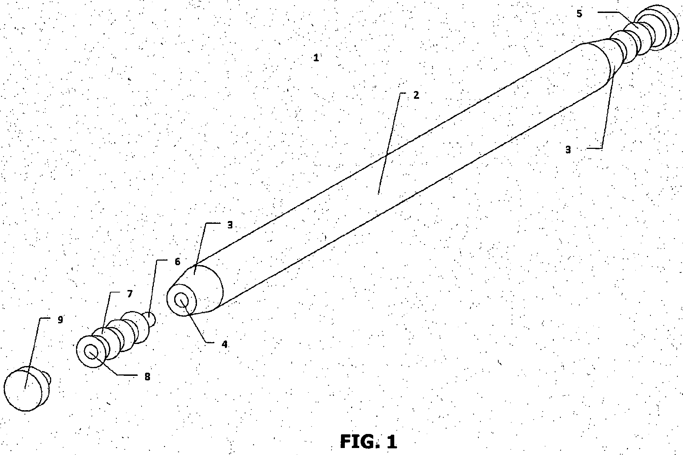

Figures 1-5 represent the sequence of manufacturing stages in one example of a load bar manufactured with resin reinforced with fibres in accordance with the present invention. In this example, the load bar is manufactured with dry carbon fibres, in which a thermostable epoxy resin is infused. It is nevertheless important to understand that the method described herein may be carried out using other types of fibre, such as glass, boron and kevlar fibres and natural fibres, which are highly resistant, as well as other resins such as phenolic, bismaleimide and polyester resins and others, including both thermoplastics and thermostables. What is more, it is important to understand that the bar of resin reinforced with fibres described may be manufactured using an alternative terminal formation, for example using terminals with' built-in ball joints, bushings and other joining elements.

Figure 1 represents the stages involved in configuring the mandrel (1). In accordance with an embondiment, preparing the mandrel (1), comprises a first machining stage using a narrow tolerance of a foam core (2), generally tubular in form, with chamfered ends (3) and holes (4). The process is continued by stabilising the foam material by means of overcooking for at least 36 hours. Nevertheless it is known in the state of the art that the cycle of the stabilisation process will depend on the type of foam chosen. In a second stage, two steel terminals (5) are machined including a joining bar (6) at one end dimensioned in order to cooperate with the machined hole (4) in the foam core (2), a threaded hole (8) at the other end and openings (7). Finally, a third stage involves providing nylon lids (9) or lids made of any other material, in order to protect the threaded hole against ingesting resin in the previous stages of the process.

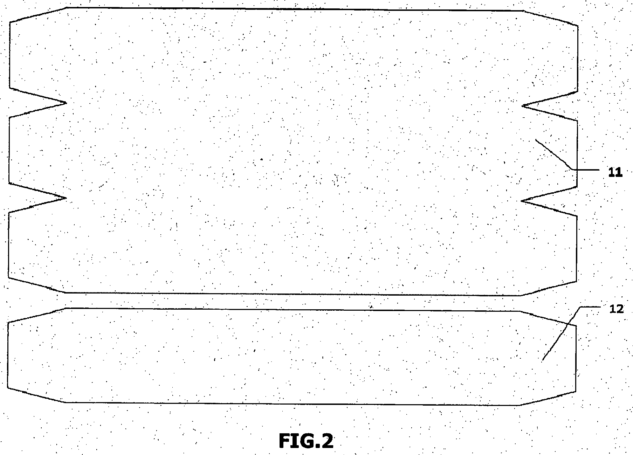

Figure 2 represents fabric patterns cut in a second stage in accordance with the method described in the present application. In an embodiment, a fabric made of unidirectional, long carbon fibres with a ratio of at least 90% fibres running in the main direction and 10% running in the pick-up direction, composed of bundles of 6k (six thousand) fibres in the main direction and bundles of 1k (1 thousand) fibres in the pick-up direction are cut using the pattern (11). Likewise, at least one pattern (12) is cut for flat-woven fabrics made of carbon fibres, with a ratio of 50% of the fibres running in the main direction and 50% of the fibres in the pick-up direction, composed of bundles of 3k (three thousand) fibres. In an embodiment, the pattern (11) is cut with the dimensions required to cover the mandrel with four layers of material, whilst in turn, a layer of fabric made of flat layers is also cut using the pattern (12), in order to cover the mandrel with one single layer of material.

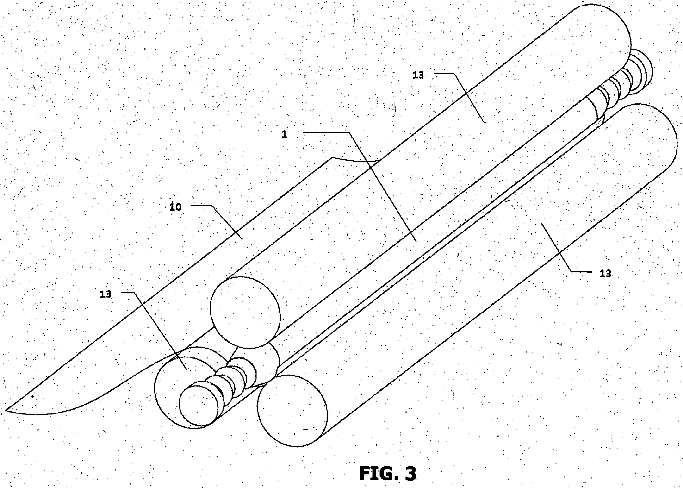

Figure 3 represents the process for laminating a pre-form of fabrics made of dry fibres on the mandrel. In an example of the method in accordance with the present invention, the mandrel (1) is wrapped with each one of the fabrics made of carbon fibres (10). Three heated cylinders (13) which have elastic supports exert pressure on the mandrel. Said cylinders include mechanical means in order to rotate along with the mandrel (1), rolling the fabric made of dry fibres on the mandrel (1). An alternative formation of cylinders can be seen, which may be used in order to obtain the desired geometrical formation on the mandrel. Moreover, the use of other means to laminate the fabrics on the mandrel can be observed, for instance a manual iron with a surface capable of rotating in unison with the mandrel (1), which applies pressure and heat to the fabric made of dry fibres. A bundle of carbon fibres is subsequently applied by means of a filament winding machine in a tangential direction close to 90° with the axial direction forcing the fabrics made of dry carbon fibres to penetrate the openings (7) of the terminals (5), said openings (7) thus acting as a fibre trap, facilitating a highly resistant join between the fabrics made of carbon fibre and the metal terminal.

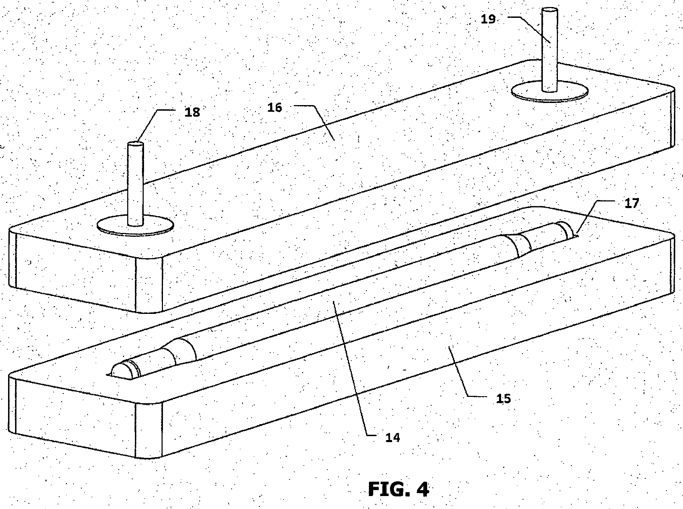

Figure 4 represents the stage of transferring liquid resin to the preform (14) of dry fabrics made of carbon fibre in a mould and counter mould ensemble. In an embodiment, said mould (20) is comprised of a mould base (15) with an upper lid (16) which when closed, closes both together tightly. Said mould (20) has a mould cavity (17) the dimensions of which are designed to adjust to the preform of the fabrics made of dry fibres (14). As already mentioned, it is critically important to obtain a preform of dry fibres (14) with narrow tolerances, with the aim of adjusting to the mould cavity (17) and being able to obtain a piece without manufacturing defects.

In an embodiment, a liquid epoxy resin is heated and mixed in a vacuum recipient (not shown). Subsequently, vacuum is heated and applied within the recipient and if necessary, the resin is left to degas for at least 45 minutes. Once the resin has been degassed, the feeder lines and the mould are heated and the resin is transferred to the mould, applying a pressure of 3 bars to the resin recipient and applying vacuum in the inside of the mould. The preform (14) of dry fibres is impregnated with the injected resin. Subsequently, heat is applied to mould up to 180°C for 90 minutes, in order to polymerise the epoxy resin and consolidate the piece.

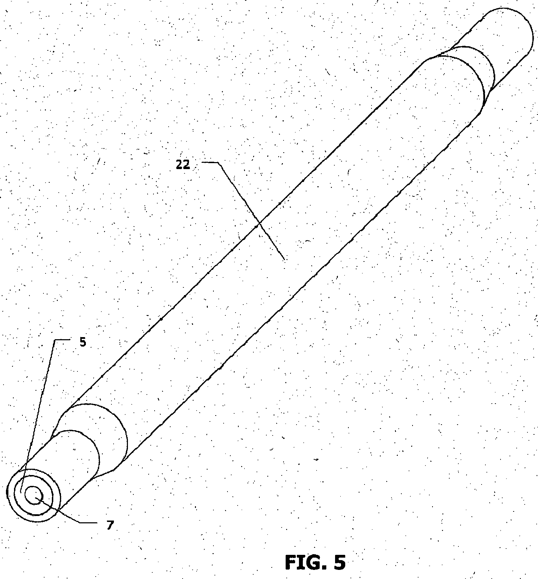

Figure 5 represents a finished bar (12) made of resin reinforced with fibres manufactured in accordance with the method set out in the present invention, after having removed the lids (9) and milled the external faces of the bar terminals.

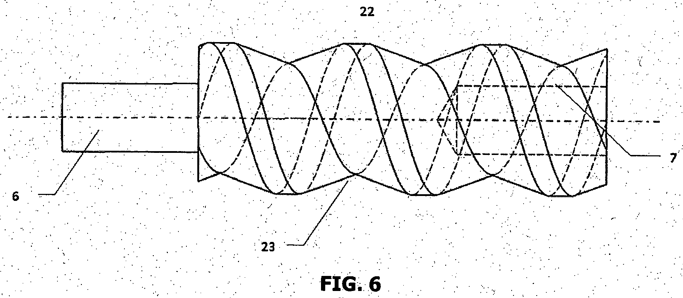

In a preferred embodiment of the present invention, as shown in Figure 6, an alternative terminal (22) is employed for the bar. With the aim of improving the resistance against torsion loads applied to the bar terminal (22) and of improving the way in which the dry fibres conform to the bar terminal, a helical opening (23) is machined on the external diameter of the bar terminal.

## Claims

1. Method for manufacturing load bars manufactured with resin reinforced with fibres for a resin transfer process which comprises the following stages:
- Cutting patterns (11) from fabrics made of dry fibres (10)
- Machining a low density core (2) with reduced tolerance and sticking two metal terminals (5) with adhesive in order to form a mandrel (1)
- Laminating a preform (14) of dry fibres (10) on the mandrel (1) with pressure and temperature, thus achieving a close fit to the mandrel (1)
- Winding a filament of highly resistant dry fibres (10) with high tension, pressing the dry fibres (10) into machined fibre traps in the terminals (5)
- Inserting the preform (14) into the mould (20)
- Transferring the resin by applying pressure and/or heat in vacuum conditions
- Consolidating the resin

2. Method for manufacturing load bars manufactured with resin reinforced with fibres, according claim 1, wherein the pressure and heat throughout the stage in which the preform (14) is laminated are applied to the surface of the fabrics with rotational movement on the mandrel (1) using a manual iron.

3. Method for manufacturing load bars manufactured with resin reinforced with fibres, according claim 1, wherein the pressure and heat throughout the stage in which the preform (14) is laminated is applied to the surface of the fabrics with a tool which comprises at least two cylinders (13), which exert pressure on the surface of the laminate of the mandrel (1) by means of elastic means and provide heat and, in turn, one of them provides the rotational movement to the ensemble.

## Patentansprüche

1. Verfahren zum Herstellen von Belastungsstäben, welche mit einem mit Fasern verstärkten Harz hergestellt sind, für einen Harzinjektionsprozess, welcher die folgenden Schritte umfasst:
- Zuschneiden von Mustern (11) aus Stoffen, welche aus trockenen Fasern (10) bestehen,
- Bearbeiten eines Kerns (2) mit niedriger Dichte mit einer reduzierten Toleranz und Anhaften von zwei Metallklemmen (5) mit Klebstoff zum Bilden eines Dorns (1),
- Laminieren einer Vorform (14) aus trockenen Fasern (10) an dem Dorn (1) mit Druck und Temperatur, wodurch eine enge Anpassung an dem Dorn (1) erreicht wird,
- Wickeln eines Filaments aus hochfesten trockenen Fasern (10) mit hohem Druck, wobei die trockenen Fasern (10) in bearbeiteten Faserfallen in den Klemmen (5) gedrückt werden,
- Einsetzen der Vorform (14) in die Form (20),
- Injizieren des Harzes durch Aufbringen von Druck und/oder Wärme unter Vakuumbedingungen,
- Verfestigen des Harzes.

2. Verfahren zum Herstellen von Belastungsstäben, welche mit einem mit Fasern verstärkten Harz hergestellt sind, nach Anspruch 1, wobei der Druck und die Wärme während des Schritts, in welchem die Vorform (14) laminiert wird, auf die Oberfläche der Stoffe mit einer Drehbewegung an dem Dorn (1) unter Verwendung eines manuellen Plätteisens aufgebracht werden.

3. Verfahren zum Herstellen von Belastungsstäben, welche mit einem mit Fasern verstärkten Harz hergestellt sind, nach Anspruch 1, wobei der Druck und die Wärme während des Schritts, in welchem die Vorform (14) laminiert wird, auf die Oberfläche der Stoffe mit einem Werkzeug aufgebracht werden, welches mindestens zwei Walzen (13) umfasst, die Druck auf die Oberfläche des Laminats des Dorns (1) mittels elastischer Mittel ausüben und Wärme bereitstellen, und von denen eine wiederum der Anordnung die Drehbewegung bereitstellt.

## Revendications

1. Procédé pour la fabrication de barres de charge fabriquées avec de la résine renforcée avec des fibres par un processus de transfert de résine qui comprend les étapes suivantes :
- Plans de coupe (11) de tissus en fibres sèches (10)
- Usiner un noyau de faible densité (2) avec une tolérance réduite et coller deux terminaux en métal (5) avec de l'adhésif afin de former un mandrin (1)
- Laminer une préforme (14) de fibres sèches (10) sur le mandrin (1) avec une pression et une température, obtenant ainsi une étroite correspondance au mandrin (1)
- Bobiner un filament de fibres sèches hautement résistantes (10) avec une tension élevée, en comprimant les fibres sèches (10) dans des pièges de fibres usinées dans les terminaux (5)
- Insérer la préforme (14) dans le moule (20)
- Transférer la résine en appliquant une pression et/ou une chaleur dans des conditions sous-vide
- Consolider la résine

2. Procédé pour la fabrication de barres de charge fabriquées avec de la résine renforcée avec des fibres, selon la revendication 1, dans lequel la pression et la chaleur pendant l'étape dans laquelle la préforme (14) est laminée sont appliquées à la surface des tissus avec un mouvement rotatif sur le mandrin (1) en utilisant un fer à repasser manuel.

3. Procédé pour la fabrication de barres de charge fabriquées avec de la résine renforcée avec des fibres, selon la revendication 1, dans lequel la pression et la chaleur pendant l'étape dans laquelle la préforme (14) est laminée sont appliquées à la surface des tissus avec un outil qui comprend au moins deux cylindres (13), qui exercent une pression sur la surface du laminé du mandrin (1) par le biais de moyens élastiques et fournissent de la chaleur et, à son tour, l'un d'eux fournit le mouvement rotatif à l'ensemble.
